# EUROPEAN PATENT APPLICATION

(11) **EP 2 194 635 A1**
(43) Date of publication of application: **09.06.2010**
(21) Application number: 08834069.0
(22) Date of filing: 26.08.2008
(51) Int. Cl.: H02K 33/02

(54) **VIBRATION-TYPE LINEAR ACTUATOR**

(30) Priority: 25.09.2007 JP 2007247929
(71) Applicant: Panasonic Electric Works Co., Ltd., Kadoma-shi Osaka 571-8686 (JP)
(72) Inventor: KOBAYASHI, Noboru, Osaka 571-8686 (JP); KANADA, Kensaku, Osaka 571-8686 (JP); MORIGUCHI, Masashi, Osaka 571-8686 (JP)
(74) Representative: Appelt, Christian W.
(86) International application number: PCT/JP2008/065148
(87) International publication number: WO 2009/041201

(57) **Abstract**

Provided is a vibrating linear actuator 1 in which a reciprocatingly driving magnetic block 6 is formed as a movable element, first and second magnetic blocks 6a,6b are provided with first and second drive elements 13a, 13b, respectively, and the magnetic blocks 6a,6b are reciprocatingly driven in the mutually reversed phases. In the actuator 1, first and second output parts 15a,15b are provided on the first drive element 13a, third and fourth output parts 15c, 15d are provided on the second drive element 13b, and the output parts 15a, 15b and the output parts 15c, 15d are disposed on the mutually opposite sides of a line L passing through the center of gravity.

## Description

### TECHNICAL FIELD

The present invention relates to a vibrating linear actuator used as a drive source of a device such as a reciprocating electric shaver.

### BACKGROUND ART

As disclosed in Japanese Patent Laid-open Publication No. 2005-354879 (hereinafter, referred to as Patent Literature 1), a conventional vibrating linear actuator is know, which includes: an electromagnetic core block (a fixed element block) having an electric magnet; and magnetic blocks (movable elements) each having a permanent magnet and a back-yoke.

In this Patent Literature 1, the electromagnetic core block and the magnetic blocks are placed so that the electric magnet is opposed to each permanent magnet with a small gap therebetween. The electric magnet is supplied with current to reciprocatingly drive the magnetic blocks relative to the electromagnetic core block.

Moreover, the two magnetic blocks are arranged adjacent to each other and are reciprocatingly driven in opposite phase.

Each of the magnetic blocks arranged adjacent to each other is provided with a drive element, and the drive element is provided with an output portion.
Patent Literature 1: Japanese Patent Laid-open Publication No. 2005-354879

### DISCLOSURE OF INVENTION

### TECHNICAL PROBLEM

However, in the conventional vibrating linear actuator, the drive element provided for each of the two magnetic blocks arranged adjacent to each other is provided with the single output portion. The two output portions provided for the magnetic blocks are therefore oppositely placed on each side of a center-of-gravity line which passes through a center-of-gravity of the vibrating linear actuator or a device incorporating the vibrating linear actuator and extends in a direction that the electromagnetic core block and each magnetic block are arranged.

When the two magnetic blocks are reciprocatingly driven in opposite phase, the moment around the center-of-gravity line which is generated by force acting on one of the output portions and the moment around the center-of-gravity which is generated by force acting on the other output portion then point a same rotational direction. Accordingly, while being driven, the vibrating linear actuator is subjected to rotational force around the center of gravity by the above two moments, thus generating large vibration.

Accordingly, an object of the present invention is to provide a vibrating linear actuator with vibration suppressed.

### TECHNICAL SOLUTION

An invention of claim 1 achieving the aforementioned object is a vibrating linear actuator including: an electromagnetic core block including an electric magnet; and a magnetic block including a permanent magnet and a back-yoke, the permanent magnet being opposed to the electric magnet with space therebetween, and the vibrating linear actuator in which one or both of the electromagnetic core block and the magnetic block being reciprocatingly driven by supplying current to the electric magnet, in which one of the electromagnetic core block and the magnetic block which is reciprocatingly driven is configured to serve as movable elements, the movable elements are arranged adjacent to each other and reciprocatingly driven in opposite phase, at least one of drive elements provided for the movable elements is provided with a plurality of output portions, and the plurality of output portions are placed on each side of a center-of-gravity line which passes through a center-of-gravity of the vibrating linear actuator or a device incorporating the vibrating linear actuator and extends in a direction that the electromagnetic core block and each magnetic block are arranged.

An invention according to claim 2 is the vibrating linear actuator according to claim 1 in which a coupling portion holding substantially a constant gap between the electric magnet and the permanent magnet is provided between the electromagnetic core block and the magnetic block.

An invention according to claim 3 is the vibrating linear actuator according to claim 1 or 2 in which at least one of the drive elements other than the drive elements provided with the plurality of output portions is provided with a single output portion and the single output portion is placed on the center-of-gravity line.

An invention according to claim 4 is the vibrating linear actuator according to any one of claims 1 to 3 in which the plurality of output portions are placed substantially symmetrically with respect to the center-of-gravity line.

### ADVANTAGEOUS EFFECTS

According to the invention of claim 1, the vibrating linear actuator includes the plurality of movable elements at which are reciprocatingly driven in opposite phase, and at least one of the drive elements provided for the movable elements is provided with the plurality of output portions. The plurality of output portions are arranged on each side of the center-of-gravity line of the center-of-gravity of the vibrating linear actuator or the device incorporating the vibrating linear actuator. Accordingly, when the plurality of output portions move in a same direction, the rotational moments generated at the output portions act in the directions opposite to each other. The rotational moment generated at the output portions placed on one side of the center-of-gravity acts so as to cancel the rotational moment on the other side. It is therefore possible to reduce the rotational movement of the vibrating linear actuator around the center-of gravity, thus reducing the vibration of the vibrating linear actuator.

According to the invention of claim 2, the coupling portion is provided between the electromagnetic core block and magnetic block to hold substantially constant space between the electromagnetic core block and magnetic block. It is therefore possible to stabilize the drive of the vibrating linear actuator, thus enhancing the effect on suppressing the vibration of the vibrating linear actuator.

According to the invention of claim 3, at least one of the drive elements other than the drive elements provided with the plurality of movable elements is provided with the single output portion, and the single output portion is placed on the center-of-gravity line. This can prevent generation of the rotational moment at the above output portion. The effect of suppressing the vibration of the vibrating linear actuator can be therefore further enhanced.

According to the invention of claim 4, the plurality of output portions are placed substantially symmetrically with respect to the center-of-gravity line. At the output portions provided at the positions symmetrical with respect to the center-of-gravity, therefore, rotational moments having same magnitude but pointing in opposite directions are generated. Accordingly, the generated rotational moments are canceled each other, thus further enhancing the effect of suppressing the vibration of the vibrating linear actuator.

### BRIEF DESCRIPTION OF THE DRAWINGS

FIG. 1 is an entire perspective view of a vibrating linear actuator according to a first embodiment of the present invention.
FIG. 2 is a plan view of the vibrating linear actuator according to the first embodiment of the present invention.
FIG. 3 is a front view of the vibrating linear actuator according to the first embodiment of the present invention.
FIG. 4 is a side view of the vibrating linear actuator according to the first embodiment of the present invention.
FIG. 5 is a front view of the vibrating linear actuator showing a first modification of the first embodiment.
FIG. 6 is a front view of the vibrating linear actuator showing a second modification of the first embodiment.
FIG. 7 is a plan view of the vibrating linear actuator according to a second embodiment of the present invention.
FIG. 8 is a side view of the vibrating linear actuator according to the second embodiment of the present invention.
FIG. 9 is a plan view of the vibrating linear actuator according to a third embodiment of the present invention.
FIG. 10 is a side view of the vibrating linear actuator according to the third embodiment of the present invention.

### BEST MODE FOR CARRYING OUT THE INVENTION

Hereinafter, embodiments of the present invention are described in detail with reference to the drawings.

### (First Embodiment)

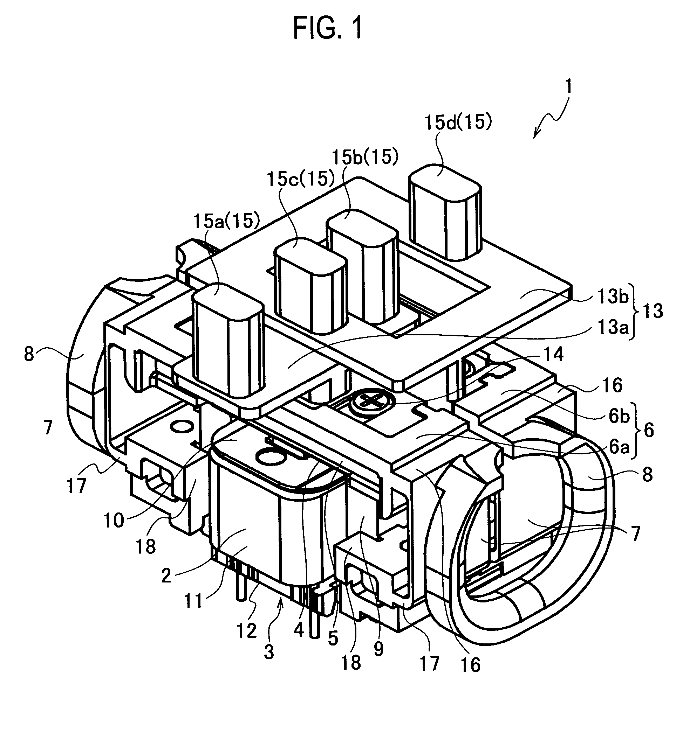

As shown in FIGS. 1 to 4, a vibrating linear actuator 1 of a first embodiment includes: an electromagnetic core block 3 having an electric magnet 2; and magnetic blocks 6 each having a permanent magnet 4 and a back-yoke 5. The magnetic blocks 6 are configured to be reciprocatingly driven relative to the electromagnetic core block 3 by supplying current to the electric magnet 2.

In the first embodiment, the reciprocatingly driven magnetic blocks 6 are configured to serve as movable elements. The magnetic blocks 6 as the movable elements are composed of first and second magnetic blocks 6a and 6b which are independent from each other. The first and second magnetic blocks 6a and 6b are arranged adjacent to each other in a direction perpendicular to the vibrating direction of the magnetic blocks 6 (in a C direction).

Between the electromagnetic core block 3 and magnetic blocks 6, coupling portions 7 and coupling spring portions 8 are provided. The coupling portions 7 connect the electromagnetic core block 3 and the magnetic blocks 6 with space provided therebetween. The coupling spring portions 8 set a specific natural frequency of the magnetic blocks 6.

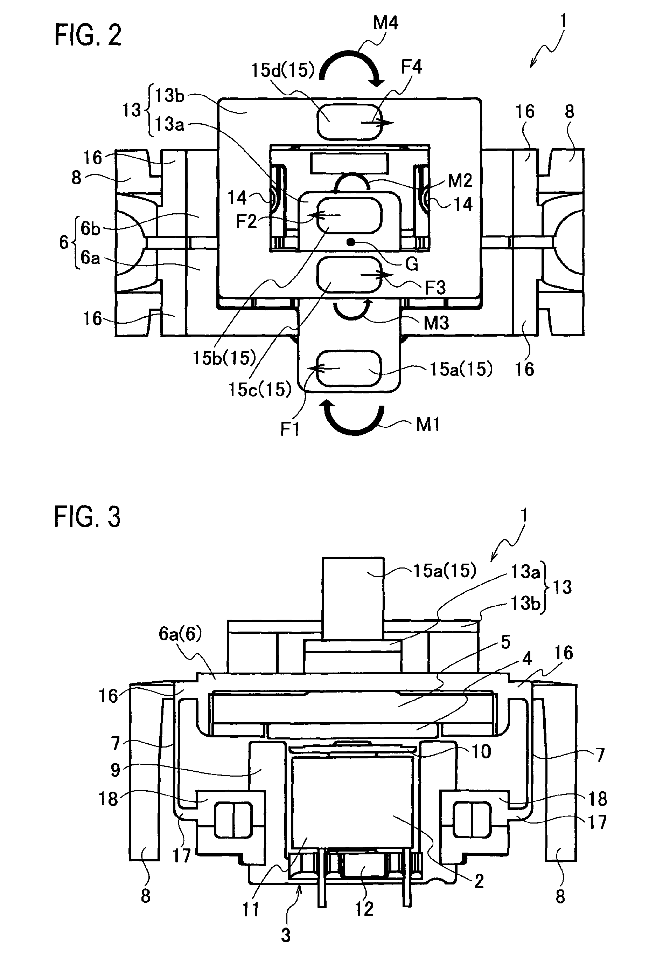

As shown in FIG. 2, the electromagnetic core block 3 includes the electric magnet 2 which is formed by providing electric winding wire 11 through a bobbin 10 for a core 9 composed of layers of a sintered magnetic material or iron plates. In the surface of the electric magnet 2 opposite to the magnetic surface, a base 12 is fixed by screwing or press fitting.

In each magnetic block 6, the permanent magnet 4 is provided in the surface thereof facing the magnetic surface of the electric magnet 2 (the lower surface in FIG. 2). At the back of the permanent magnet 4 (in the upper surface in FIG. 2), the back-yoke 5 is embedded. In the surface of the magnetic blocks 6 opposite to each permanent magnet 4 (in the upper surface in FIG. 2), drive elements 13 are later-attached by screws 14. The drive elements 13 are provided with output portions 15.

In the vibrating linear actuator 1, not-shown inner blades are attached to the output portions 15 of the drive elements 13. Each inner blade slides on a porous outer blade provided for head part of the body of the electric shaver to cut beard drawn from the outside. The vibrating linear actuator 1 is thus used for driving the electric shaver.

The drive elements 13 include first and second drive elements 13a and 13b which are provided for the first and second magnetic blocks 6a and 6b, respectively.

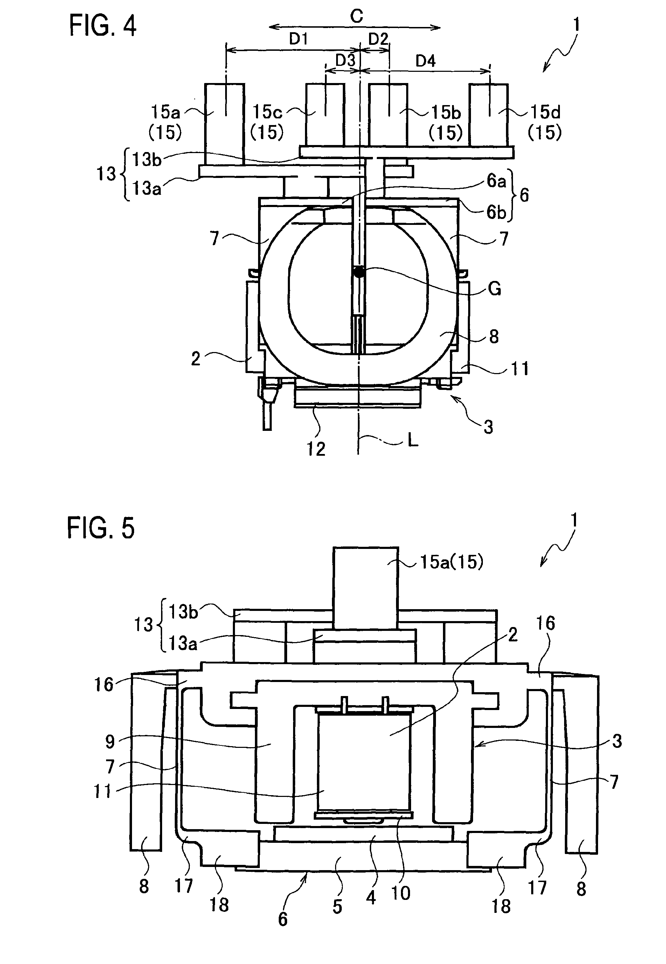

The first drive element 13a has a rectangular plate shape with long sides extending in the width direction of FIG. 4 (in the C direction). The second drive element 13b is placed above the upper surface of the first drive element 13a with a small gap therebetween and is shaped in a rectangular frame plate surrounding an end of the rectangular first drive element 13a.

Each of the first and second drive elements 13a and 13b is provided with two of the output portions 15. The first and second output portions 15a and 15b are provided on the both longitudinal ends of the first drive element 13a, and the third and fourth output portions 15c and 15d are provided for the both side edges of the second drive element 13b in the width direction (in the C direction).

On the both sides of each of the first and second magnetic blocks 6a and 6b in the vibrating directions, upper connecting portions 16 are integrally formed so as to face in the outward direction, which is equal to the vibrating direction. In each upper connecting portion 16, an end (an upper end) of the corresponding coupling portion 7 is integrally formed. At the other end of the coupling portion 7, a lower connecting portion 17 is integrally formed.

Each coupling portion 7 is shaped in a plate and is configured to have enough rigidity to hold the magnetic block 6 while allowing flexural deformation thereof in the vibrating direction.

The first and second magnetic blocks 6a and 6b are arranged adjacent to each other in a direction which is orthogonal to the vibrating direction and the direction that pole faces of each permanent magnet 4 and electric magnet 2 are opposed to each other. The first and second magnetic blocks 6a and 6b arranged adjacent to each other are coupled to each other by coupling spring portions 8.

Each of the coupling spring portions 8 is formed in a ring shape and springs in the vibrating direction of the first and second magnetic blocks 6a and 6b. An end of each coupling spring portion 8 is integrally joined to the upper connecting portion 16 of the first magnetic block 6a, and the other end is integrally joined to the upper connecting portion 16 of the second magnetic block 6b. To reciprocatingly drive the first and second magnetic blocks 6a and 6b as the movable elements in a symmetrical manner, the first and second magnetic blocks 6a and 6b are resonated by the coupling spring portions 8.

The lower connecting portions 17 which are adjacent in the direction that the first and second magnetic blocks 6a and 6b are arranged (in the C direction) are integrally fixed to each other by an end joint portion 18. Accordingly, the first and second magnetic blocks 6a and 6b placed adjacent to each other are integrated by the coupling spring portions 8 at the both ends in the vibrating direction and are also integrated by the end joint portions 18 integrally connecting the lower connecting portions 17. The end joint portions 18 are attached to the base 12 of the electromagnetic core block 3.

With the above configuration, by supplying the electric magnet with current being repeatedly reversed in direction, the electric magnet 2 and permanent magnet 4 are repeatedly attracted and repelled. The magnetic blocks 6a and 6b are thus reciprocatingly driven relative to the electric core blocks 3. By setting the polarity of the permanent magnet 4 of the first magnetic block 6a to be opposite to the polarity of the permanent magnet 4 of the second magnetic block 6b, the magnetic blocks 6a and 6b, which are adjacent to each other, are reciprocatingly driven in opposite phase.

Herein, as shown in FIG. 4, in the first embodiment, the output portions 15a and 15b of the first magnetic block 6a and the output portions 15c and 15d of the second magnetic block 6b are placed on each side of a center-of-gravity line L which passes through a center-of-gravity G of the vibrating linear actuator 1 (or an electric shaver as a device incorporating the vibrating linear actuator 1) and extends in the direction that the electromagnetic core block 3 and each magnetic block 6 are arranged (in the vertical direction in FIG. 4).

As shown in FIG. 4, the output portion 15a of the first drive element 13a is disposed at a distance D1 from the center-of-gravity line L on a side thereof in the width C direction (on the left side in FIG. 4) while the other output portion 15b of the first drive element 13a is disposed at a distance D2 (D1 # D2) from the center-of-gravity line L on the other side thereof in the width C direction (on the right side in FIG. 4). The output portion 15c of the second drive element 13b is disposed at a distance D3 from the center-of-gravity line L on a side thereof in the width C direction (on the left side in FIG. 4) while the other output portion 15d of the second drive element 13b is disposed at a distance D4 (D3 ≠ D4) from the center-of-gravity line L on the other side thereof in the width C direction (on the right side in FIG. 4).

According to the above-described first embodiment, the drive elements 13a and 13b provided for the first and second magnetic blocks 6a and 6b, which are reciprocatingly driven in opposite phase, each includes two output portions, which are 15a and 15b, and 15c and 15d. The paired output portions 15a and 15b are placed on each side of the center-of-gravity line L, and the paired output portions 15c and 15d are placed on each side of the center-of-gravity line L. Accordingly, when the output portions 15a and 15b move in a same direction and the output portions 15c and 15d move in a same direction, as shown in FIG. 2, moments M1 and M3 generated around the center-of-gravity line L by forces F1 and F3 acting on the output portions 15a and 15c point in a direction opposite to moments M2 and M4 generated around the center-of-gravity line L by forces F2 and F4 acting on the other output portions 15b and 15d.

The rotational moments M1 and M3 generated at the output portions 15a and 15c and the rotational moments M2 and M4 generated at the other output portions 15b and 15d act so as to cancel each other. This can reduce the rotational movement of the vibrating linear actuator 1 around the center-of-gravity G and therefore suppressing vibration of the vibrating liner actuator 1 itself.

In the first embodiment, the distances D1 and D2 of the output portions 15a and 15b of the first drive element 13a from the center-of-gravity line L are different from the distances D3 and D4 of the output portions 15c and 15d of the second drive element 13b from the center-of-gravity line L, respectively. The rotational moments M1 and M3 and the rotational moments M2 and M4 cannot completely cancel each other, but the first embodiment has an effect on suppressing the vibration of the entire vibrating linear actuator 1.

### (Modification of First Embodiment)

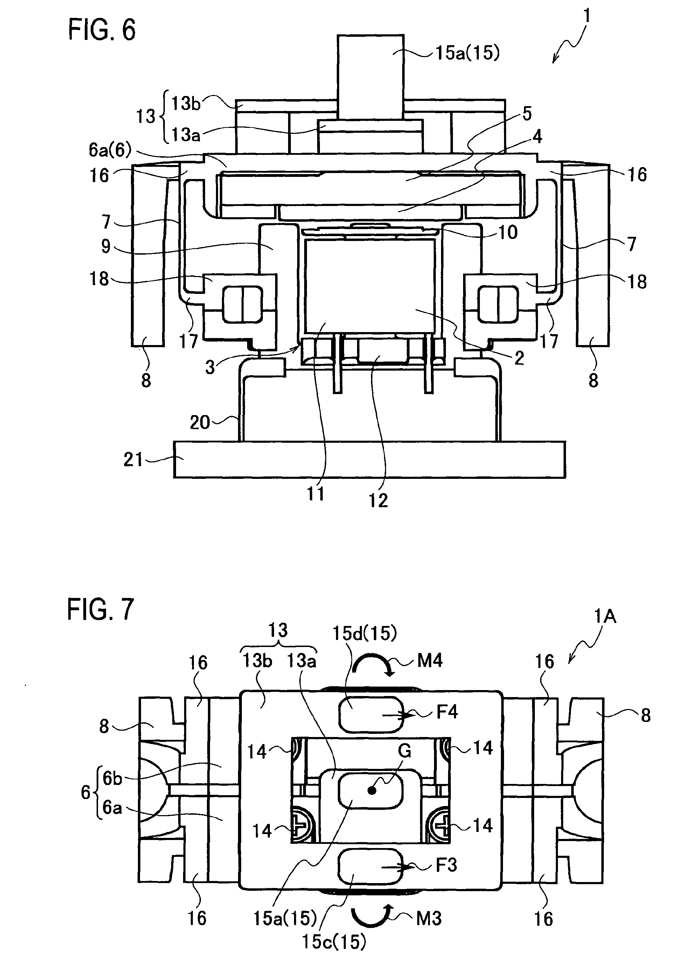

FIGS. 5 and 6 are front views of vibrating linear actuators illustrating first and second modifications of the first embodiment, respectively. The vibrating linear actuators according to the first and second modifications include the same constituent elements as those of the vibrating linear actuator 1 according to the first embodiment. Those same constituent elements are given the same reference numerals or symbols, and the redundant description thereof is omitted.

In the first modification shown in FIG. 5, the electromagnetic core block 3 and magnetic blocks 6 are interchanged in the direction that the electric magnet 2 and each permanent magnet 4 are opposed to each other (in the vertical direction in FIG. 5), and the electromagnetic core block 3 is used as the movable element. One of the drive elements 13 is then provided for the electromagnetic core block 3 as the movable element, and the output portions 15 are provided for the drive element 13.

A plurality of the electromagnetic core blocks 3 are arranged adjacent to each other in the direction perpendicular to the reciprocating direction, and at least one of the drive elements 13 provided for the electromagnetic core blocks 3 is provided with a plurality of the output portions 15.

Also according to the first modification, the plurality of output portions 15 are arranged on each side of the center-of-gravity line L, and it is therefore possible to provide the same operational effect as that of the first embodiment.

In the second modification shown in FIG. 6, the electromagnetic core blocks 3 of the vibrating linear actuator 1 configured similarly to the first embodiment are connected to a fixed portion (for example, a housing) 21 of the device through a joint member 20 movable only in the reciprocating direction of the magnetic blocks 6. At this time, the magnetic blocks 6 are configured to serve as the movable elements.

Accordingly, in the second modification, deformation of the joint member 20 allows the vibrating linear actuator 1, or the electromagnetic core block 3 and magnetic blocks 6 to be reciprocatingly driven relative to the fixed portion 21.

Also according to the second modification, the output portions 15a and 15b of the first magnetic block 6a, and the output portions 15c and 15d of the second magnetic block 6b are arranged on each side of the center-of-gravity line L, and it is therefore possible to provide the same operational effect as that of the first embodiment.

### (Second Embodiment)

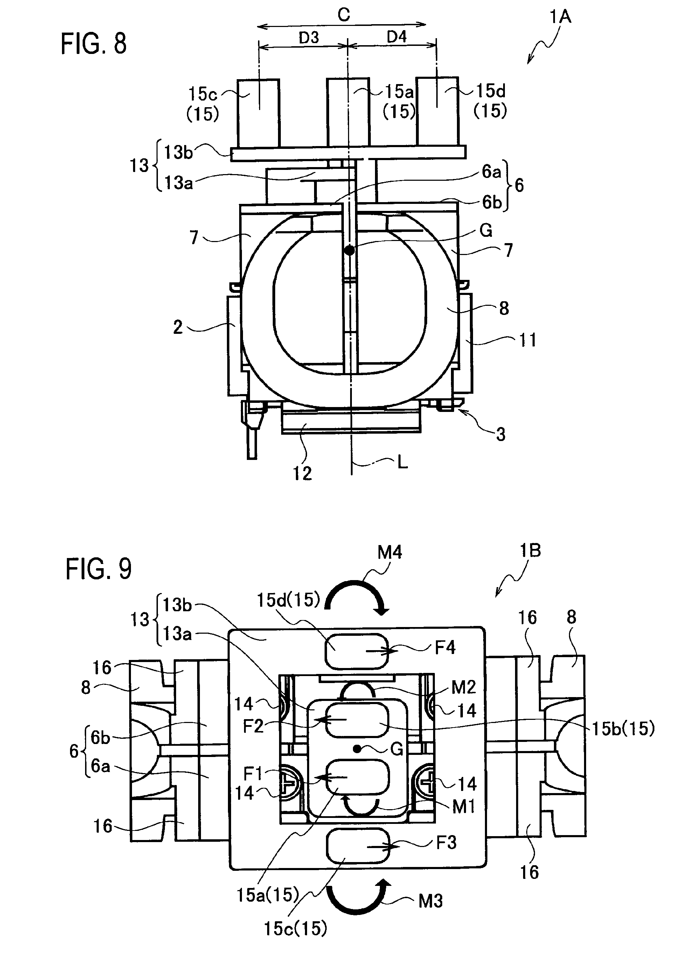

FIGS. 7 and 8 show a second embodiment of the present invention, same constituent portions as those of the first embodiment are given the same reference numerals or symbols, and the redundant description is omitted.

A vibrating linear actuator 1A of the second embodiment basically has the substantially same structure as that of the vibrating linear actuator 1 of the first embodiment.

Specifically, the vibrating linear actuator 1A includes: the electromagnetic core block 3 including the electric magnet 2; and the magnetic blocks 6 each including the permanent magnet 4 and back-yoke 5. The magnetic blocks 6 are configured to serve as movable elements.

The magnetic blocks 6 as the movable elements are composed of the independent first and second blocks 6a and 6b, which are provided with the first and second drive elements 13a and 13b, respectively.

The first drive element 13a is shaped in a rectangular plate and is provided with the single output portion 15a at an end thereof.

The second drive element 13b is placed above the upper surface of the first drive element 13a with a small gap therebetween and is shaped in a rectangular frame plate surrounding the output portion 15a of the first drive element 13a. The third and fourth output portions 15c and 15d are provided at both side edges of the second drive element 13b in the width direction (in the C direction).

Herein, in the second embodiment, the single output portion 15a provided for the first drive element 13a is placed on the center-of-gravity line L.

The third and fourth output portions 15c and 15d provided for the second drive element 13b are symmetrically placed (D3=D4) with respect to the center-of-gravity line L.

According to the above structure, since the single output portion 15a of the first drive element 13a is placed on the center-of-gravity line L, the force F1 acting on the output portion 15a is on the center-of-gravity line L. Accordingly, any rotational moment around the center-of-gravity G is not generated at the output portion 15a, thus enhancing the effect on reducing the vibration of the vibrating liner actuator 1A.

Also in the second embodiment, the third and fourth output portions 15c and 15d are symmetrically placed with respect to the center-of-gravity line L. Accordingly, the rotational moments M3 and M4 around the center-of-gravity G by the forces F3 and F4 acting on the third and fourth output portions 15c and 15d, respectively, are substantially equal to each other and point in directions opposite to each other. The rotational moments M3 and M4 can therefore substantially completely cancel each other, thus further enhancing the effect on reducing the vibration of the vibrating linear actuator 1A.

It is also possible to apply the structures of the first and second modifications shown in FIGS. 5 and 6 to the vibrating linear actuator 1A of the second embodiment.

### (Third Embodiment)

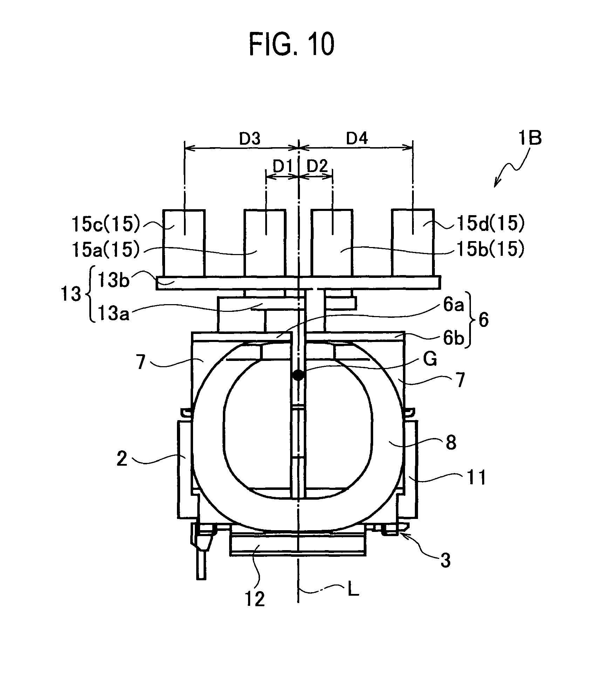

FIGS. 9 and 10 show a third embodiment of the present invention. Same constituent components thereof as those of the first embodiment are given the same reference numerals or symbols, and the redundant description is omitted.

A vibrating linear actuator 1B of the third embodiment basically has the substantially same structure as that of the vibrating linear actuator 1 of the first embodiment. Specifically, the vibrating linear actuator 1B includes: the electromagnetic core blocks 3 including the electric magnet 2; and the magnetic blocks 6 each including the permanent magnet 4 and back-yoke 5. The magnetic blocks 6 are configured to serve as movable elements.

The magnetic blocks 6 as the movable elements are composed of the independent first and second blocks 6a and 6b, which are provided with the first and second drive elements 13a and 13b, respectively.

The first drive element 13a is shaped in a rectangular plate and is provided with the output portions 15a and 15b at both ends in the width direction (in the C direction).

The second drive element 13b is placed above the upper surface of the first drive element 13a with a small gap therebetween and is shaped in a rectangular frame plate fully surrounding the first drive element 13a. The third and fourth output portions 15c and 15d are provided at both side edges of the second drive element 13b in the width direction (in the C direction).

Herein, in the third embodiment, the plurality of first and second output portions 15a and 15b are substantially symmetrically placed with respect to the center-of-gravity line L, and the plurality of third and fourth output portions 15c and 15d are substantially symmetrically placed with respect to the center-of-gravity line L. Specifically, the first and second output portions 15a and 15b are placed so that D1=D2, and the third and fourth output portions 15c and 15d are placed so that D3=D4.

As described above, according to the vibrating linear actuator 1B of the third embodiment, the first and second output portions 15a and 15b are provided for the first drive element 13a, and the third and fourth output portions 15c and 15d are provided for the second drive element 13b. The first and second output portions 15a and 15b are substantially symmetrically placed with respect to the center-of-gravity line L, and the third and fourth output portions 15c and 15d are substantially symmetrically placed with respect to the center-of-gravity line L.

Accordingly, the magnitude of the rotational moment M1 generated at the first output portion 15a placed on one side of the drive element 13 is substantially equal to the magnitude of the rotational moment M2 which is generated at the second output portion 15b placed on the other side and acts in the direction opposite to the rotational moment M1. Moreover, the magnitude of the rotational moment M3 generated at the first output portion 15c placed on one side of the drive element 13, is substantially equal to the magnitude of the rotational moment M4 which is generated at the fourth output portion 15d placed on the other side and acts in the direction opposite to the rotational moment M3. The rotational moments M1 and M2 can cancel each other, and the rotational moments M3 and M4 can cancel each other, thus enhancing the effect on suppressing the vibration.

Moreover, similar to the second embodiment, it is also possible to apply the structures of the first and second modifications shown in FIGS. 5 and 6 to the vibrating linear actuator 1B of the second embodiment.

The preferred embodiments of the vibrating linear actuator according to the present invention are described above. However, the present invention is not limited to the aforementioned embodiments and can employ various embodiments without departing from the scope of the invention.

### INDUSTRIAL APPLICABILITY

According to the present invention, it is possible to provide a vibrating linear actuator with vibration suppressed.

## Claims

1. A vibrating linear actuator comprising:
an electromagnetic core block including an electric magnet; and
a magnetic block including a permanent magnet and a back-yoke, the permanent magnet being opposed to the electric magnet with space therebetween, and
the vibrating linear actuator in which one or both of the electromagnetic core block and the magnetic block being reciprocatingly driven by supplying current to the electric magnet, wherein
one of the electromagnetic core block and the magnetic block which is reciprocatingly driven is configured to serve as movable elements, the movable elements are arranged adjacent to each other and reciprocatingly driven in opposite phase,
at least one of drive elements provided for the movable elements is provided with a plurality of output portions, and
the plurality of output portions are placed on each side of a center-of-gravity line which passes through a center-of-gravity of the vibrating linear actuator or a device incorporating the vibrating linear actuator and extends in a direction that the electromagnetic core block and each magnetic block are arranged.

2. The vibrating linear actuator according to claim 1, wherein a coupling portion holding a substantially constant gap between the electric magnet and the permanent magnet is provided between the electromagnetic core block and the magnetic block.

3. The vibrating linear actuator according to claim 1 or 2, wherein
at least one of the drive elements other than the drive elements provided with the plurality of output portions is provided with a single output portion, and
the single output portion is placed on the center-of-gravity line.

4. The vibrating linear actuator according to any one of claims 1 to 3, wherein the plurality of output portions are placed substantially symmetrically with respect to the center-of-gravity line.
